# EUROPÄISCHE PATENTSCHRIFT

(11) **EP 1 408 239 B1**
(45) Veröffentlichungstag und Bekanntmachung des Hinweises auf die Patenterteilung: **01.02.2006**
(21) Anmeldenummer: 03103654.4
(22) Anmeldetag: 02.10.2003
(51) Int. Cl.: F15B 13/00, F16K 27/00

(54) **Mehrwegeventil mit einem scheibenartigen Ventilgehäuse**
Multi-way valve with a plate shaped valve housing
Vanne à voies multiples avec un boitier en forme de plaque

(30) Priorität: 07.10.2002 DE 10246764
(43) Veröffentlichungstag der Anmeldung: 14.04.2004
(73) Patentinhaber: Bosch Rexroth AG, 70442 Stuttgart (DE)
(72) Erfinder: Widera, Jörg, Gerlingen, 70839 (DE)
(74) Vertreter: Kietzmann, Lutz

(56) Entgegenhaltungen:
- EP-A- 0 719 949
- DE-A- 19 943 691
- FR-A- 2 647 522
- US-A- 5 704 399

## Beschreibung

Die vorliegende Erfindung betrifft ein Mehrwegeventil gemäβ den Oberbegriffs des Anspruchs 1.

Mehrwegeventile der hier interessierenden Art kommen für die Bildung einer Ventileinheit zur Anwendung. Eine Ventileinheit besteht aus mehreren einzelnen Mehrwegeventilen, welche blockartig zusammengefasst sind und gemeinsame Speisedruckkanäle sowie Entlüftungskanäle nutzen, um durch kurze Leitungswege die Druckmittelver- und Entsorgung zu gewährleisten. Hierbei werden im Wesentlichen zwei Grundprinzipe unterschieden. Zum einen existieren Ventileinheiten in Grundplattenausführung; zum anderen sind Ventileinheiten mit scheibenartigen Mehrwegeventilen bekannt, bei denen auf eine Grundplatte verzichtet werden kann.

Aus der DE 35 30 019 A1 geht eine Ventileinheit in Grundplattenausführung hervor (Fig. 5). Die Grundplatte enthält hier sämtliche Druckmittelkanäle, welche zur Druckmittelver- und Entsorgung der Mehrwegeventile erforderlich sind. So enthält die Grundplatte einen Speisedruckkanal, zwei Entlüftungskanäle sowie diverse quer hierzu verlaufende Arbeitskanäle. Die Druckmittelkanäle stehen über entsprechende Durchgangsöffnungen mit korrespondierenden Öffnungen am Mehrwegeventil in Verbindung. Jedes Mehrwegeventil ist mittels einer Schraubverbindung auf der Grundplatte befestigt. Der Vorteil dieser Lösung besteht darin, dass bei Defekt eines Mehrwegeventils dieses im Rahmen der Ventileinheit ausgetauscht werden kann, ohne dass eine Demontage von Druckmittelleitungen erforderlich ist. Nachteilig ist hierbei allerdings, dass die Anzahl der zu einer Ventileinheit zusammenstellbaren Mehrwegeventile von den Konstruktionsmerkmalen der Grundplatte abhängig ist. Eine Änderung der Anzahl der Mehrwegeventile kann also nur über einen Austausch der Grundplatte vorgenommen werden. Weiterhin fällt eine Ventileinheit in Grundplattenausführung wegen der vorstehend erläuterten Konstruktionsmerkmale recht großbauend aus.

Aus der EP 0 628 729 B1 geht eine Ventileinheit hervor, die dieses Problem dadurch löst, dass die Kanäle zur Druckmittelver- und Entsorgung direkt in das Ventilgehäuse des scheibenartigen Mehrwegeventils integriert sind und von Ventil zu Ventil verlaufen. Somit kann auf eine separate Grundplatte als Fluidverteiler verzichtet werden. Die Druckmittelverbindung von Ventil zu Ventil wird über diverse Anschlussöffnungen an den gegenüberliegenden großflächigen Anschlussflächen der Ventilgehäuse hergestellt. Zum Schalten des Druckmittelflusses an den an einer Schmalseite jedes Ventilgehäuses angeordneten Arbeitsanschlüssen ist ein Ventilschieber innerhalb einer korrespondierenden Schieberbohrung des Ventilgehäuses axial bewegbar geführt, um die Funktionsweise eines herkömmlichen Schieberventils auszuführen. Der Ventilschieber jedes Mehrwegeventils ist über eine Vorsteuerung bewegbar, die von einem herkömmlichen Vorsteuerventil betrieben wird. Zu diesem Zwecke ist an jedem Ventilgehäuse ein Vorsteuerventil lösbar befestigt. Die Befestigung erfolgt hier formschlüssig über eine U-förmige Halteklammer. Somit ist das Vorsteuerventil im Reparaturfall auf einfache Weise austauschbar. Wegen der Schieberventilmechanik können pro Mehrwegeventil jedoch nur zwei Arbeitsanschlüsse betrieben werden, so dass eine Vielzahl von gewünschten Arbeitsanschlüssen durch eine hohe Anzahl von Mehrwegeventilen zu realisieren ist, so dass in diesem Falle die Ventileinheit recht langbauend ausfällt.

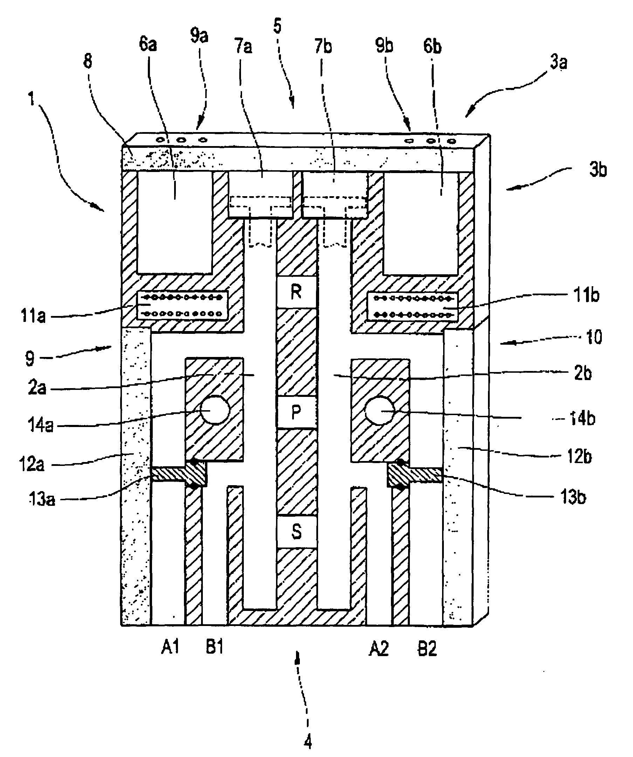

Aus der EP 0 719 949 B1 geht ein scheibenartiges Mehrwegeventil hervor, welches der Gattung der vorliegenden Erfindung entspricht und dieses Problem dadurch löst, dass pro Mehrwegeventil mehrere - hier zwei - Ventilschieber vorgesehen sind, die in entsprechenden Schieberbohrungen des Ventilgehäuses angeordnet sind. Diese Konstruktionsform ermöglicht den Betrieb von insgesamt vier Arbeitsanschlüssen pro Mehrwegeventil (Fig. 6). Durch diese Lösung kann die Baulänge einer Ventileinheit im Vergleich zu dem vorstehend beschriebenen Stand der Technik zirka um die Hälfte verkürzt werden. Gleichwohl ist zum Antrieb der mehreren Ventilschieber eine entsprechende Anzahl von Vorsteuerventilen erforderlich, die hier lösbar an einer Schmalseite des Ventilgehäuses angeschraubt sind. Eine aus diesen bekannten Mehrwegeventilen aufgebaute Ventileinheit besitzt jedoch infolge der für die Vorsteuerung erforderlichen Vorsteuerventile eine recht zerklüftete Gestalt. Weiterhin ist die Breitenausdehnung der Ventileinheit wegen der breitenmäßigen Aneinanderreihung des Vorsteuerventils, gefolgt von einer Handhilfsbetätigungseinheit, der schließlich das eigentliche Ventilgehäuse mit den Schieberbohrungen folgt, an der schließlich ein Anschlussblock mit den Arbeitsanschlüssen angeschraubt ist, recht groß.

Es ist daher die Aufgabe der vorliegenden Erfindung ein Mehrwegeventil der vorstehend beschriebenen Art dahingehend weiter zu verbessern, dass sich hieraus eine Ventileinheit einer äußerst kompakten Bauform mit einer maximalen Anzahl von Arbeitsanschlüssen herstellen lässt.

Die Aufgabe wird ausgehend von einem Mehrwegeventil gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die im Wegeventil integrierten zwei Ventilschieber den Durchfluss zu mindestens vier, gemeinsam im Wesentlichen in einer Reihe liegend, direkt an einer Schmalseite des scheibenartigen Ventilgehäuses angeordneten Arbeitsanschlüssen (A1, B1; A2, B2) schalten, wobei im Bereich der gegenüberliegenden Schmalseite des scheibenartigen Ventilgehäuses mindestens ein Einbauraum zur Unterbringung eines zugeordneten auswechselbaren Vorsteuerventils integriert ist.

Der Vorteil der erfindungsgemäßen Lösung liegt insbesondere darin, dass die spezielle Ausgestaltung des Ventilgehäuses die Voraussetzung für einen hohen Integrationsgrad schafft, womit eine äußerst kompakte Bauform erzielt werden kann. Die vier mit dem Mehrwegeventil betreibbaren Arbeitsanschlüsse (A1, B1; A2, B2) sind ohne Dazwischenschaltung eines separaten Anschlussblocks oder dergleichen an einer Schmalseite des Ventilgehäuses in einer Linie aneinandergereiht. Mit dem erfindungsgemäßen Ventilgehäuse sind somit Baubreiten von unter 10 mm erzielbar. Die Platzierung des mindestens einen Einbauraums zur Unterbringung des zugeordneten, auswechselbaren Vorsteuerventils erfolgt in einem Bereich des Ventilgehäuses, in dem ein Optimum zwischen dem erforderlichen Platzbedarf und einer funktionsgerechten Integration der vorzugsweise nach Art von Patronenventilen ausgebildeten Vorsteuerventile besteht.

Das erfindungsgemäße Mehrwegeventil kann die Ventilfunktionen 2x5/2 bistabil, 2x5/2 monostabil oder 4x3/2 durch entspreche nde allgemein bekannte Abwandlungen der Ventilschieber ausführen, wobei diese Ventilfunktionen natürlich auch beliebig miteinander kombinierbar sind.

Vorzugsweise ist das Vorsteuerventil zur Beaufschlagung einer zugeordneten Vorsteuerkammer oder - je nach Ventilfunktion - zur wechselseitigen Beaufschlagung von zwei Vorsteuerkammern ausgebildet, die letzterenfalls entweder an jeder der beiden Schieberbohrungen endseitig angeordnet sind oder an einer Schieberbohrung zu beiden Enden angeordnet sind.

Gemäß einer weiteren die Erfindung verbessernden Maßnahme ist der mindestens eine Einbauraum sowie die beiden, je einem Ventilschieber zugeordneten Vorsteuerkammern über eine gemeinsame Verschlussplatte druckdicht verschlossen, deren Breite in etwa der Breite der korrespondierenden Schmalseite des Ventilgehäuses entspricht. Eine Demontage dieser einzigen Verschlussplatte gestattet somit den Zugang sowohl zu dem mindestens einen Einbauraum zur Unterbringung des Vorsteuerventils bzw. der Vorsteuerventile und gleichzeitig auch zum Bereich der Schieberbohrungen, so dass hierüber die Ventilschieber zugänglich sind und somit Montage- bzw. Demontagearbeiten einfach vornehmbar sind.

Vorzugsweise sind über die Dicke der Verschlussplatte im Bereich des mindestens einen Einbauraums Lichtleitmittel eingebracht, um das emittierte Licht von im Einbauraum angeordneten Signalleuchtmittel nach außen zu leiten. Derartige Signalleuchtmittel können beispielsweise als Lichtemitterdioden (LED) ausgeführt sein, um den Betriebszustand des Vorsteuerventils und dergleichen anzuzeigen. Ein direkter Einbau dieser Signalleuchtmittel in die Verschlussplatte entfällt somit, so dass eine elektrische Verkabelung an der Verschlussplatte, welche Montagearbeiten behindern würde, wegfällt.

Vorzugsweise sind im Ventilgehäuse genau zwei Einbauräume vorgesehen, die je zu einer Schieberbohrung benachbart angeordnet sind, und die zur anderen Seite hin benachbart zu zwei parallelen Schmalseiten des Ventilgehäuses angeordnet sind, welche im Wesentlichen senkrecht zu den übrigen beiden Schmalseiten verlaufen. Diese spezielle Platzierung der beiden Einbauräume neben den jeweils zugeordneten Schieberbohrungen bewirkt kurze ventilinterne Kanalwege und wendet sich ab vom bisher beschritten - vorstehend erläuterten - Weg einer Hintereinanderanordnung von Vorsteuerventil und Schieberbohrung.

Gemäß der Erfindung ist zur elektrischen Anbindung des in dem mindestens ein Einbauraum untergebrachten elektromagnetischen Vorsteuerventils ein innerhalb des Ventilgehäuses benachbart zum Einbauraum verlaufender Elektrokanal für elektrische Leitungsmittel vorgesehen, über deren beidseitige Steckverbindungen die elektrischen Signale von Ventil zu Ventil durchschleifbar sind. Dieses Prinzip der elektrischen Verbindung ist zwar allgemein bekannt; der separate Elektrokanal in unmittelbarer Nachbarschaft zum Einbauraum kann hier jedoch die elektrischen Leitungsmittel abgekapselt von den übrigen Bestandteilen des Mehrwegeventils aufnehmen, so dass die Zuverlässigkeit der elektrischen Verbindung hierdurch verbessert wird.

Eine andere die Erfindung verbessernde Maßnahme bezieht sich auf ein wählbares Wechseln der Anschlussrichtung der Arbeitsanschlüsse (A1, B1; A2, B2). Je nach den herrschenden Einbaurandbedingungen und dem Einsatz der aus den erfindungsgemäßen Mehrwegeventilen aufgebauten Ventileinheit kann es wünschenswert sein, dass die Arbeitsanschlüsse nicht an der unteren Schmalseite des Ventilgehäuses austreten. In diesem Falle ermöglichen zwei seitliche Verschlussplatten, die an den beiden zur unteren Schmalseite angrenzenden parallelen Schmalseiten vorgesehen sind, einen Wechsel der Anschlussrichtung auf diese beiden parallelen Schmalseiten. Dieser Wechsel erfolgt durch eine Demontage dieser seitlichen Verschlussplatten, wodurch die ventilinterne Kanalführung entsprechend geändert wird. Zum Verschluss verbleibender Öffnungen an der unteren Schmalseite des Ventilgehäuses kann eine Verkugelung durch Einpressen von Metallkugeln oder dergleichen vorgenommen werden. Vorzugsweise weisen die seitlichen Verschlussplatten außerdem mindestens einen jeweils zugeordneten Verschlusszapfen auf, dessen dichtender distaler Endbereich eine zwischen den Kanälen der Arbeitsanschlüsse A1, B1 sowie A2, B2 liegende Öffnung verschließt, um die ventilinterne Kanalführung entsprechend der gewünschten Anschlussrichtung der Arbeitsanschlüsse (A1, B1; A2, B2) zu gestalten.

Vorzugsweise sind zumindest die Verschlussplatten aus Kunststoff gefertigt und mit dem Ventilgehäuse über eine Schraubverbindung oder eine Verschweißung verbunden. Auch das Ventilgehäuse selbst ist vorzugsweise als Kunststoffspritzteil ausgeführt.

Weitere die Erfindung verbessernde Maßnahmen werden nachfolgend gemeinsam mit der Beschreibung eines bevorzugten Ausführungsbeispiels der Erfindung anhand der einzigen Figur dargestellt. Die Figur zeigt einen Querschnitt durch ein scheibenartiges Ventilgehäuse eines Mehrwegeventils, das zur Bildung einer kompakten Ventileinheit vorgesehen ist.

Das scheibenartige Ventilgehäuse 1 weist zwei parallel zueinander verlaufende Schieberbohrungen 2a, 2b auf. Die beiden Schieberbohrungen 2a und 2b dienen der Aufnahme von jeweils zugeordneten - nicht weiter dargestellten - Ventilschiebern. Es sei angemerkt, dass die Figur lediglich die wesentlichen Gehäusebestandtelle des erfindungsgemäßen Mehrwegeventils wiedergibt, auf die sich die Erfindung konzentriert. Die nicht dargestellten Bestandteile der Ventilmechanik sind jedoch geläufig und gehen beispielsweise aus dem eingangs genannten druckschriftlichen Stand der Technik analog hervor, auf den insoweit an dieser Stelle ausdrücklich verwiesen wird. Die beiden Schieberbohrungen 2a und 2b wirken mit einem gemeinsamen zentralen Speisedruckkanal P sowie zwei beidseits des Speisedruckkanals P angeordneten Entlüftungskanälen R, S zusammen, deren Druckmittelverbindung über zugeordnete - nicht dargestellte - Anschlussöffnungen an den gegenüberliegenden großflächigen Anschlussflächen 3a, 3b des scheibenartigen Ventilgehäuses 1 in herkömmlicher Weise herstellbar ist. Mit den Schieberbohrungen 2a, 2b stehen in jeweils paarweiser Zuordnung vier Arbeitsanschlüsse A1, B1 sowie A2, B2 in Verbindung. Die Arbeitsanschlüsse A1, B1; A2, B2 sind gemeinsam in einer Reihe liegend direkt an einer Schmalseite 4 des scheibenartigen Ventilgehäuses 1 platziert. Im Bereich der gegenüberliegenden Schmalseite 5 des scheibenartigen Ventilgehäuses 1 sind dagegen zwei Einbauräume 6a, 6b zur Unterbringung zugeordneter - hier nicht dargestellter - Vorsteuerventile integriert. In die Einbauräume 6a, 6b werden jeweils Vorsteuerventile nach Art von Patronenventilen eingesetzt. Mittels der Vorsteuerventile werden zugeordnete Vorsteuerkammern 7a, 7b, die je endseitig der beiden Schieberbohrungen 2a und 2b ausgebildet sind, mit Vorsteuerdruck in herkömmlicher Weise beaufschlagt. Sowohl die beiden nach außen hin zu einer Seite hin offenen Einbauräume 6a und 6b als auch die beiden nach außen hin offenen Vorsteuerkammern 7a, 7b im Ventilgehäuse 1 sind über eine gemeinsame Verschlussplatte 8 verschließbar, deren Breite in etwa der Breite der korrespondierenden Schmalseite 5 des scheibenartigen Ventilgehäuses 1 entspricht. Im Bereich der beiden Einbauräume 6a und 6b sind jeweils Lichtleitmittel 9a, 9b eingebracht, welche durch die Verschlussplatte 8 hindurch Licht nach außen leiten, das von in den Einbauräumen 6a und 6a angeordneten - nicht weiter dargestellten - Signalleuchtmitteln emittiert wird. Zur Erzielung einer kompakten Bauform sind die beiden Einbauräume 6a und 6b je seitlich benachbart zu den zugeordneten Vorsteuerkammern 7a und 7b der Schieberbohrungen 2a bzw. 2b angeordnet. Zur anderen Seite hin grenzen die Einbauräume 6a, 6b an die jeweilige Schmalseite 9 bzw. 10 des Ventilgehäuses 1 an. Zur elektrischen Anbindung des in den beiden Einbauräumen 6a, 6b jeweils untergebrachten elektromagnetischen Vorsteuerventils sind elektrische Leitungsmittel vorgesehen, welche durch einen zum Einbauraum 6a bzw. 6b benachbart quer verlaufenden Elektrokanal 11a bzw. 11b hindurchgeführt sind.

Zum Wechseln der Anschlussrichtung der Arbeitsanschlüsse A1, B1; A2, B2 von der Schmalseite 4 an die beiden angrenzend parallelen Schmalseiten 9 und 10 sind zwei zugeordnete seitliche Verschlussplatten 12a, 12b vorgesehen, welche die ventilinterne Kanalführung wie gezeigt bestimmen. Jede seitliche Verschlussplatte 12a und 12b weist einen angeformten Verschlusszapfen 13a, 13b auf, dessen dichtender distaler Endbereich mittels eines Dichtrings gebildet wird. Der dichtende distale Endbereich verschließt im montierten Zustand eine zwischen den Kanälen der Arbeitsanschlüsse A1, B sowie A2, B2 liegende Öffnung, um die ventilinterne Kanalführung entsprechend der gewünschten Anschlussrichtung der Arbeitsanschlüsse A1, B1; A2, B2 zu gestalten. Nach Entfernen der Verschlussplatten 12a, 12b sind die Anschlussöffnungen B1 und A2 an der Schmalseite 4 über eingepresste Kugeln zu verschließen, um die korrekte Ventilfunktion nach Wechsel der Anschlussrichtung sicherzustellen.

Zumindest die beiden Verschlussplatten 12a und 12b sind aus Kunststoff gefertigt und mit dem Ventilgehäuse 1 in dem vorliegenden Ausführungsbeispiel über eine Verschweißung verbunden. Insoweit ist das Ventilgehäuse 1 hier aus demselben Kunststoff durch Spritzgießen gefertigt. Die einzelnen Mehrwegeventile 1 werden zur Bildung einer Ventileinheit über Zuganker mit - nicht weiter dargestellten - Endplatten verschraubt. Die Zuganker verlaufen durch die Durchgangsbohrungen 14a, 14b im Ventilgehäuse 1.

Die vorliegende Erfindung ist nicht beschränkt auf das vorstehend beschriebene bevorzugte Ausführungsbeispiel. Es sind vielmehr auch Abwandlungen hiervon denkbar, die von der Lehre der nachfolgenden Ansprüche Gebrauch machen. So ist die vorliegende Erfindung nicht allein beschränkt auf die angegebene Ausbildung der beiden Schieberbohrungen 2a und 2b mit den beiden zugeordneten Vorsteuerkammern 7a bzw. 7b, mit denen hier eine 2x5/2 monostabile Ventilfunktion ausführbar ist. Es sind vielmehr auch andere Ventilfunktionen, insbesondere eine 2x5/2 bistabile oder 4x3/2 Ventilfunktionen möglich.

### Bezugszeichenliste

- 1: Ventilgehäuse
- 2: Schieberbohrung
- 3: Anschlussfläche
- 4: Schmalseite
- 5: Schmalseite
- 6: Einbauraum
- 7: Vorsteuerkammer
- 8: Verschlussplatte
- 9: Schmalseite
- 10: Schmalseite
- 11: Elektrokanal
- 12: Verschlussplatte
- 13: Verschlusszapfen
- 14: Durchgangsbohrung

## Patentansprüche

1. Mehrwegeventil, insbesondere zur Bildung einer Ventileinheit, dessen scheibenartiges Ventilgehäuse Ventilgehäuse (1) zwei im Wesentlichen parallel zueinander verlaufende Schieberbohrungen (2a, 2b) zur Aufnahme von mindestens zwei zugeordneten Ventilschiebern aufweist, welche gemeinsam mit einem zentralen Speisedruckkanal (P) sowie zwei beidseits des Speisedruckkanals (P) angeordneten Entlüftungskanälen (R, S) zusammenwirken, deren Druckmittelverbindung über zugeordnete Anschlussöffnungen an den gegenüberliegenden großflächigen Anschlussflächen (3a, 3b) des scheibenartigen Ventilgehäuses (1) herstellbar ist,
**dadurch gekennzeichnet, dass** die Ventilschieber den Druckmittelfluss zu mindestens vier gemeinsam im Wesentlichen in einer Reihe liegend, direkt an einer Schmalseite (4) des scheibenartigen Ventilgehäuses (1) angeordneten Arbeitsanschlüssen (A1, B1; A2, B2) schalten, wobei im Bereich der gegenüberliegenden Schmalseite (5) des scheibenartigen Ventilgehäuses (1) mindestens ein Einbauraum (6a, 6b) zur Unterbringung eines zugeordneten, auswechselbaren Vorsteuerventiles integriert ist, und dass zur elektrischen Anbindung des in dem mindestens einen Einbauraum (6a, 6b) untergebrachten elektromagnetischen Vorsteuerventils ein innerhalb des Ventilgehäuses benachbart zum Einbauraum (6a, 6b) verlaufender Elektrokanal (1a, 11b) für elektrische Leitungsmittel vorgesehen ist.

2. Mehrwegeventil nach Anspruch 1,
**dadurch gekennzeichnet, dass** das in den Einbauraum (6a, 6b) einsetzbare Vorsteuerventil nach Art eines Patronenventils ausgebildet ist.

3. Mehrwegeventil nach Anspruch 1 oder 2,
**dadurch gekennzeichnet, dass** das Vorsteuerventil zur Beaufschlagung einer zugeordneten Vorsteuerkammer (7a, 7b) oder zur wechselseitigen Beaufschlagung von zwei Vorsteuerkammern ausgebildet ist, die letzterenfalls entweder an jeder der beiden Schieberbohrungen (2a, 2b) endseitig angeordnet sind oder an einer Schieberbohrung zu beiden Enden angeordnet sind.

4. Mehrwegeventil nach Anspruch 1,
**dadurch gekennzeichnet, dass** der mindestens eine Einbauraum (6a, 6b) sowie die beiden, je einem Ventilschieber zugeordneten Vorsteuerkammern (7a, 7b) über eine gemeinsame Verschlussplatte (8) verschlossen sind, deren Breite in etwa der Breite der korrespondierenden Schmalseite (5) des Ventilgehäuses (1) entspricht.

5. Mehrwegeventil nach Anspruch 4,
**dadurch gekennzeichnet, dass** über die Dicke der Verschlussplatte (8) im Bereich des mindestens einen Einbauraums (6a; 6b) Lichtleitmittel (9a; 9b) eingebracht sind, um das emittierte Licht von im Einbauraum (6a, 6b) angeordneten Signalleuchtmitteln nach Außen zu leiten.

6. Mehrwegeventil nach Anspruch 4 oder 5,
**dadurch gekennzeichnet, dass** genau zwei Einbauräume (6a, 6b) vorgesehen sind, die je seitlich benachbart zu einer Schieberbohrung (2a, 2b) angeordnet sind, und die ebenfalls benachbart zu zwei parallelen Schmalseiten (9, 10) des Ventilgehäuses (1) angeordnet sind, welche im Wesentlichen senkrecht zu den übrigen beiden Schmalseiten (4, 5) verlaufen.

7. Mehrwegeventil nach Anspruch 1,
**dadurch gekennzeichnet, dass** über beidseitige Steckverbindungen die elektrischen Signale von Ventil zu Ventil durchschleifbar sind.

8. Mehrwegeventil nach einem der vorstehenden Ansprüche,
**dadurch gekennzeichnet, dass** zum Wechseln der Anschlussrichtung der Arbeitsanschlüsse (A1, B1; A2, B2) von der Schmalseite (4) an die beiden angrenzenden parallelen Schmalseiten (9, 10) zwei zugeordnete seitliche Verschlussplatten (12a, 12b) vorgesehen sind, welche die ventilinterne Kanalführung entsprechend bestimmen.

9. Mehrwegeventil nach einem der vorstehenden Ansprüche,
**dadurch gekennzeichnet, dass** die seitliche Verschlussplatte (12a, 12b) mindestens einen Verschlusszapfen (13a; 13b) aufweist, dessen dichtender distaler Endbereich eine zwischen den Kanälen der Arbeitsanschlüsse (A1, B1 sowie A2, B2) liegende Öffnung verschließt, um die ventilinterne Kanalführung entsprechend der gewünschten Anschlussrichtung der Arbeitsanschlüsse (A1, B1; A2, B2) zu gestalten.

10. Mehrwegeventil nach einem der vorstehenden Ansprüche,
**dadurch gekennzeichnet, dass** zumindest die Verschlussplatten (12a, 12b) aus Kunststoff gefertigt sind und mit dem Ventilgehäuse (1) über eine Schraubverbindung oder durch eine Verschweißung verbunden sind.

## Claims

1. A multiport valve, in particular for forming a valve unit, having a disk-like valve housing (1) comprising two valve bores (2a, 2b) extending essentially parallel to each other for containing at least two associated valve spools interacting together with a central feeding pressure channel (P) and two venting channels (R, S) arranged on either side of the feeding pressure channel (P), wherein a pressurized-medium communication can be established via associated port openings at the opposite large-surface coupling surfaces (3a, 3b) of the disk-like valve housing (1),
**characterised in that** the valve spools switch the pressure medium flow to at least four working ports (A1, B1; A2, B2) disposed together essentially in a row and arranged directly on a narrow side (4) of the disk-like valve housing (1), wherein at least one insertion space (6a, 6b) is integrated in the area of the opposite narrow side (5) of the disk-like valve housing (1) to accommodate an associated exchangeable pilot valve, and **in that** for electrically coupling the electromagnetic pilot valve accommodated in said at least one insertion space (6a, 6b) an electric channel (11 a, 11 b) is provided for electric conductor means and extends within the valve housing adjacent to the insertion space (6a, 6b).

2. The multiport valve according to claim 1,
**characterised in that** the pilot valve insertable in said insertion space (6a, 6b) is formed in the manner of a cartridge valve.

3. The multiport valve according to claim 1 or 2,
**characterised in that** said pilot valve is configured to apply pressure to an associated pilot chamber (7a, 7b) or to alternately apply pressure to two pilot chambers which, in the latter case, are arranged at an end of each of said two valve bores (2a, 2b) or at both ends of a valve bore.

4. The multiport valve according to claim 1,
**characterised in that** said at least one insertion space (6a, 6b) and the two pilot chambers (7a, 7b) each associated with one valve spool are closed off by a common cover plate (8) having a width of about the width of the corresponding narrow side (5) of the valve housing (1).

5. The multiport valve according to claim 4,
**characterised in that** optical conductor means (9a; 9b) are inserted to extend through the thickness of the cover plate (8) in the area of said at least one insertion space (6a; 6b) to transmit the light emitted by signal lighting means arranged in the insertion space (6a, 6b) to the outside.

6. The multiport valve according to claim 4 or 5,
**characterised in that** exactly two insertion spaces (6a, 6b) are provided, which are each arranged laterally adjacent to a valve bore (2a, 2b) and are also arranged adjacent to two parallel narrow sides (9, 10) of the valve housing (1), which extend essentially at right angles to the remaining two narrow sides (4, 5).

7. The multiport valve according to claim 1,
**characterised in that** the electrical signals can be looped from one valve to the next via plug connectors on both sides.

8. The multiport valve according to any one of the preceding claims,
**characterised in that** to change the direction of connection of the working ports (A1, B1; A2, B2) from the narrow side (4) to the two adjacent parallel narrow sides (9, 10) two associated lateral cover plates (12a, 12b) are provided, which determine the way in which the channels are conducted within the valve.

9. The multiport valve according to any one of the preceding claims,
**characterised in that** the lateral cover plate (12a, 12b) comprises at least one stopping stud (13a; 13b) with a sealing distal end region closing off an opening arranged between the channels of the working ports (A1, B2, and A2, B2) in order to configure the way in which the channels are conducted within the valve according to the desired direction of connection of the working ports (A1, B1; A2, B2).

10. The multiport valve according to any one of the preceding claims,
**characterised in that** at least the cover plates (12a, 12b) are of plastic material and are connected to the valve housing (1) via screw connections or via a weld.

## Revendications

1. Distributeur à plusieurs voies, en particulier pour former une unité de distributeur, dont le boîtier de distributeur (1) en forme de plaque comprend deux perçages à tiroir (2a, 2b) s'étendant sensiblement parallèlement l'un à l'autre et destinés à recevoir au moins deux tiroirs associés qui coopèrent conjointement avec un canal central à pression d'alimentation (P) ainsi qu'avec deux canaux de mise à l'air (R, S) agencés de part et d'autre du canal à pression d'alimentation (P) et dont la liaison à fluide sous pression peut être établie via des ouvertures de raccordement associées sur les grandes surfaces de raccordement opposées (3a, 3b) du boîtier de distributeur (1) en forme de plaque, **caractérisé en ce que** les tiroirs du distributeur établissent le flux du fluide sous pression vers au moins quatre raccords de travail (A1, B1; A2, B2) situés conjointement essentiellement en une rangée et disposés directement sur un petit côté (4) du boîtier de distributeur (1) en forme de plaque, et dans la zone du petit côté (5) opposé du boîtier de distributeur (1) en forme de plaque, il est prévu au moins un compartiment de montage (6a, 6b) pour loger une valve pilote associée remplaçable, et **en ce que** pour la connexion électrique de la valve pilote électromagnétique logée dans ledit au moins un compartiment de montage (6a, 6b), il est prévu un canal électrique (11a, 11b) destiné à des moyens formant ligne électrique et s'étendant à l'intérieur du boîtier de distributeur au voisinage du compartiment de montage (6a, 6b).

2. Distributeur à plusieurs voies selon la revendication 1, **caractérisé en ce que** la valve pilote susceptible d'être mise en place dans le compartiment de montage (6a, 6b) est réalisée à la manière d'une valve à cartouche.

3. Distributeur à plusieurs voies selon l'une ou l'autre des revendications 1 et 2, **caractérisé en ce que** la valve pilote est réalisée pour alimenter une chambre pilote associée (7a, 7b) ou pour la l'alimentation alternante de deux chambres pilotes qui, dans ce dernier cas, sont disposées soit au niveau de chacun des deux perçages à tiroir (2a, 2b) du côté extrémité soit au niveau d'un perçage à tiroir aux deux extrémités.

4. Distributeur à plusieurs voies selon la revendication 1, **caractérisé en ce que** ledit au moins un compartiment de montage (6a, 6b) ainsi que les deux chambres pilotes (7a, 7b) associées chacune à un tiroir sont refermés par une plaque d'obturation commune (8) dont la largeur correspond approximativement à la largeur du petit côté correspondant (5) du boîtier de distributeur (1).

5. Distributeur à plusieurs voies selon la revendication 4, **caractérisé en ce que** des moyens guides de lumière (9a ; 9b) sont intégrés sur l'épaisseur de la plaque d'obturation (8) dans la zone dudit au moins un compartiment de montage (6a ; 6b), afin de conduire vers l'extérieur la lumière émise depuis des moyens lumineux de signalisation agencés dans le compartiment de montage (6a, 6b).

6. Distributeur à plusieurs voies selon l'une ou l'autre des revendications 4 et 5, **caractérisé en ce qu'**il est prévu précisément deux compartiments de montage (6a, 6b) qui sont disposés chacun latéralement au voisinage d'un perçage à tiroir (2a, 2b) et qui sont disposés également au voisinage de deux petits côtés parallèles (9, 10) du boîtier de distributeur (1), qui s'étendent sensiblement perpendiculairement aux deux autres petits côtés (4, 5).

7. Distributeur à plusieurs voies selon la revendication 1, **caractérisé en ce que** les signaux électriques sont susceptibles d'être passés d'une valve à l'autre via des liaisons à enfichage bilatérales.

8. Distributeur à plusieurs voies selon l'une des revendications précédentes, **caractérisé en ce que** pour changer la direction de raccordement des raccords de travail (A1, B1; A2, B2) depuis le petit côté (4) vers les deux petits côtés parallèles adjacents (9, 10), il est prévu deux plaques d'obturation latérales associées (12a, 12b) qui déterminent en correspondance le trajet du canal interne au distributeur.

9. Distributeur à plusieurs voies selon l'une des revendications précédentes, **caractérisé en ce que** la plaque d'obturation latérale (12a, 12b) comprend au moins un tenon d'obturation (13a ; 13b) dont la zone d'extrémité distale referme avec étanchement une ouverture située entre les canaux des raccords de travail (A1, B1 et A2, B2), afin de réaliser le trajet du canal interne au distributeur en correspondance de la direction de raccordement désirée des raccords de travail (A1, B1; A2, B2).

10. Distributeur à plusieurs voies selon l'une des revendications précédentes, **caractérisé en ce qu'**au moins les plaques d'obturation (12a, 12b) sont fabriquées en matière plastique et reliées au boîtier de distributeur (1) via une liaison vissée ou via une liaison soudée.
